# EUROPÄISCHE PATENTSCHRIFT

(11) **EP 1 890 116 B1**
(45) Veröffentlichungstag und Bekanntmachung des Hinweises auf die Patenterteilung: **25.06.2008**
(21) Anmeldenummer: 06016980.2
(22) Anmeldetag: 15.08.2006
(51) Int. Cl.: G01F 15/00, G01F 1/06, G01F 1/075, G01F 1/10, G01F 1/115, G01F 15/06

(54) **Betrugssicherer Flüssigkeitsströmungsmesser**
Tamperproof liquid flow meter
Compteur de liquides infraudable

(43) Veröffentlichungstag der Anmeldung: 20.02.2008
(73) Patentinhaber: Lorenz GmbH & Co. KG, 89601 Schelklingen-Ingstetten (DE)
(72) Erfinder: Dannecker, Andreas, 89601 Schelkling-Sondernach (DE)
(74) Vertreter: Meyer, Thorsten

(56) Entgegenhaltungen:
- WO-A-20/04111576
- GB-A- 2 123 556
- US-A- 5 086 292

## Beschreibung

Die Erfindung betrifft Zählereinheit für einen Volumenstromzähler mit einem mechanischen Zählwerk. Des weiteren betrifft die Erfindung ein Verfahren zur Erfassung eines Volumenstroms.

Volumenstromzähler für Wasser oder Gasleitungen werden mit austauschbaren Zählereinheiten bestückt. Diese müssen über einen längeren Zeitraum möglichst genaue Messdaten über die durch eine Leitung geflossene Fluid-Menge liefern.

Moderne bekannte Wasserzähler sind dabei elektronisch ausgestaltet wobei ein mittelbar durch das strömende Fluid periodisch bewegter Permanentmagnet ausgewertet wird.

Nachteilig hierbei ist, dass ein solches System durch mutwillig von außen hinzugefügte Magnetfelder gestört werden kann, was eine korrekte Erfassung stört.

Aus der US5086292 und der GB2123556 sind Zählereinheiten mit einer Auswerteschaltung zur Erfassung einer äusseren magnetischen Störung bekannt.

Aus der WO2004/111576 ist eine Zählereinheit mit einer Magnetische oder Optische Erfassung bekannt.

Aufgabe der Erfindung ist es eine verbesserte Zählereinheit für einen Volumenstromzähler und ein Verfahren zur Erfassung eines Volumenstroms zur Verfügung zu stellen, bei dem ein wirksamer Manipulationsschutz vorgesehen ist.

Diese Aufgabe wird durch eine Zählereinheit nach den Merkmalen des Anspruchs 1 und ein Verfahren nach den Merkmalen des Anspruchs 10 gelöst.

Erfindungsgemäß ist eine Zählereinheit für einen diesen insbesondere austauschbar aufnehmenden Volumenstromzähler vorgeschlagen, mit einer Magnetkupplung zur Zusammenwirkung mit einer Hydraulik im Volumenstromzähler, mit einem bewegte Teile aufweisenden mechanischen Zählwerk, das über die Magnetkupplung angetrieben wird, wobei ein elektronisches Zählwerk vorgesehen ist, das mittels Abtast-Sensoren getriggert ist, wobei ein opto-elektronischer Abtast-Sensor und ein magneto-elektronischer Abtast-Sensor vorgesehen ist, die ein magnetisches und ein optisches Merkmal an einem bewegten Teil des Zählwerks auswerten.

Durch das zusätzlich vorgesehene mechanische Zählwerk ist bei totalem Ausfall der Elektronik oder bei Störung der elektronischen Erfassung und dem damit verbundenen Ausfall der Fernabfrage eine korrekte Erfassung der Volumenmenge noch möglich. Durch die Kombination von opto-elektronischem Abtast-Sensor und magneto-elektronischem Abtast-Sensor ist zudem ein wirksamer Schutz gegen Manipulation von außen gegeben. Wird der magneto-elektronischem Abtast-Sensor gestört, kann vermittels des opto-elektronischen Abtast-Sensors die elektronische Erfassung der Volumenmenge erfolgen. Im Falle, dass keine Störung vorliegt, kann die Erfassung über den viel weniger elektrische Energie verbrauchenden magneto-elektronischen Abtast-Sensor erfolgen.

Nach einer besonders bevorzugten Ausgestaltung der Erfindung ist vorgesehen, dass ein magneto-elektronischer Manipulations-Sensor zur Detektion von die Zählereinheit durchdringenden Stör-Magnetfeldern vorgesehen ist. Hierdurch kann festgestellt werden, ob ein Manipulationsversuch durch von außen aufgebrachte Magnetfelder erfolgt.

Die Erfindung ermöglicht eine echt redundante Lösung, da der mechanische Zähler weiter zugänglich und ablesbar bleibt, dies macht die Auswertung auch bei Ausfall der Elektronik einfach und damit zeitsparend möglich.

Dem folgend ist gemäß einer weiteren vorteilhaften Ausgestaltung der Erfindung vorgesehen, dass der magneto-elektronische Abtast-Sensor und/oder der magneto-elektronische Manipulations-Sensor als ein Hall-Sensor ausgebildet ist, der einen in oder an dem bewegten Teil vorgesehenen Permanentmagneten als Merkmal auswertet.

Vorteilhafterweise ist der opto-elektronische Abtast-Sensor als Reflex-Lichtschranke ausgebildet, wobei an dem bewegten Teil insbesondere ein Reflektions- und ein Absorptionselement als Merkmal ausgewertet wird.

Bevorzugerweise ist das bewegte Teil ein Getrieberad des mechanischen Zählwerks.

Nach einer besonders bevorzugten Ausgestaltung der Erfindung ist eine Hochfrequenz-Sendevorrichtung vorgesehen, vermittels welcher der Zählerstand und/oder andere Parameter der Zählereinheit übertragen werden können. Hierdurch ist eine Fernabfrage ermöglicht, was gerade in großen Gebäudekomplexen eine Einsparung von Zeit und Kosten ermöglicht.

Eine weitere vorteilhafte Weiterbildung der Erfindung sieht vor, dass eine insbesondere bidirektionale optische Sende- und/oder Empfangsvorrichtung vorgesehen ist, vermittels welcher der Zählerstand und/oder andere Parameter der Zählereinheit übertragen werden können. Auch durch diese Variante können Fehler beim Ablesen vermieden werden und eine Abfrage kann schneller und kostengünstiger erfolgen.

Ein Mikroprozessor ist bevorzugterweise vorgesehen, der das elektronische Zählwerk und/oder die Sensoren auswertet und/oder die Hochfrequenz-Sendevorrichtung und/oder die optische Sende- und/oder Empfangsvorrichtung steuert.

Nach einem weiteren Aspekt der Erfindung ist ein Verfahren zur Erfassung eines Volumenstroms vermittels einer Zählereinheit nach einem der Ansprüche 1 bis 9, vorgeschlagen, dass sich durch die folgenden Schritte auszeichnet:
- Aktivierung nur des magneto-elektronischen Abtast-Sensors bis dieser ein sich änderndes Magnetfeld detektiert,
- zusätzliche Aktivierung des magneto-elektronischen Manipulations-Sensors sowie des opto-elektronischen Abtast-Sensors bei Detektion eines sich ändernden Magnetfelds durch den magneto-elektronischen Abtast-Sensor,
- Auswertung des Manipulations-Sensors,
- Erfassung der Drehrichtung des bewegten Teils vermittels des opto-elektronischen Abtast-Sensors und des magneto-elektronischen Abtast-Sensors zur Feststellung der Richtung des Volumenstroms durch den Volumenstromzähler,
- Deaktivierung des opto-elektronischen Abtast-Sensors.

Ein großer Vorteil hierbei liegt darin, dass durch die Abschaltung des opto-elektronischen Abtast-Sensors nach Feststellung der Drehrichtung der durch diesen Sensor verursachte Stromverbrauch vollkommen wegfällt. Der magneto-elektronische Abtast-Sensor benötigt wesentlich weniger Strom und kann zudem als selbst-getaktete Variante ausgestaltet sein, sodass dieser ohne den Mikroprozessor arbeiten kann. Hierdurch kann auch der Mikroprozessor in einen Strom sparenden Betrieb versetzt werden, wenn kein Volumenstrom zur Erfassung vorliegt.

Ein weiterer vorteilhafter und besonders bevorzugter Verfahrensschritt sieht vor, dass bei Detektion von Stör-Magnetfeldern die Auswertung des magneto-elektronischer Abtast-Sensors deaktiviert und der opto-elektronische Abtast-Sensor aktiviert wird und/oder in einem Speicher des elektronischen Zählers oder des Mikroprozessors die erkannte Manipulation gespeichert wird.

Nachfolgend wird die Erfindung anhand der Zeichnungen weiter erläutert. Im Einzelnen zeigt die schematische Darstellung in:
- Fig. 1: ein schematisches Blockschaltbild der erfindungsgemäßen Zählereinheit,
- Fig. 2: eine schematische Seitenansicht auf eine erfindungsgemäße Zählereinheit,
- Fig. 3: eine schematische Ansicht mit einer teilweisen Schnittdarstellung der Zählereinheit aus Fig. 2, wobei zur Verdeutlichung weniger Teile dargestellt sind,
- Fig. 4: eine schematische Ansicht von schräg oben auf die erfindungsgemäße Zählereinheit aus Fig. 2, und
- Fig. 5: eine schematische Ansicht entsprechend Fig. 2 von schräg oben auf die erfindungsgemäße Zählereinheit aus Fig. 4:

Die in den Figuren gleichen Bezugsziffern bezeichnen gleiche oder gleich wirkende Elemente.

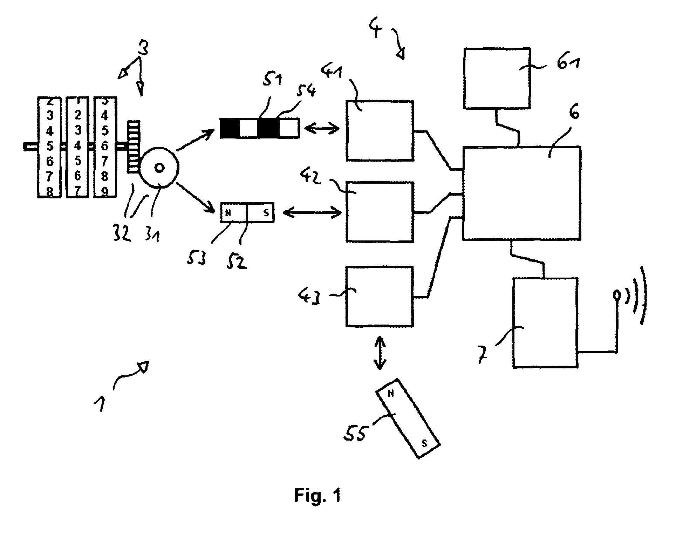

Fig. 1 zeigt eine schematisches Blockschaltbild der erfindungsgemäßen Zählereinheit 1 für Volumenstromzähler.

In an sich bekannter Weise wird mittels einer Magnetkupplung (nicht dargestellt) in Zusammenwirkung mit einer Hydraulik (nicht dargestellt) im Volumenstromzähler ein bewegte Teile 31 aufweisendes Getriebe 32 des mechanischen Zählwerks 3 angetrieben.

Zusätzlich ist ein elektronisches Zählwerk 4 vorgesehen, das mittels Abtast-Sensoren 41 und 42 getriggert ist. Die Abtast-Sensoren geben hierbei ein Signal ab, wenn ein auslösendes Merkmal 51, 52 an einem bewegten Teil 31 des mechanischen Zählwerks 3 sensiert wird.

Es ist nach der Erfindung ein opto-elektronischer Abtast-Sensor 41 und ein magneto-elektronischer Abtast-Sensor 42 vorgesehen. Diese Kombination unterschiedlicher Abtast-Sensor-Arten macht die Zählereinheit 1 durch Korrelation der Sensoren resistent gegen eine manipulatorische magnetische Beeinflussung (symbolisiert durch Magnet 55) von außen.

Von Vorteil ist ein magnetisches 52 und ein optisches 51 Merkmal an einem bewegten Teil 31 des Zählwerks zur Auswertung vorgesehen.

Der opto-elektronische Abtast-Sensor 41 ist als Reflex-Lichtschranke ausgebildet, wobei an dem bewegten Teil 31 insbesondere ein Reflektions- und ein Absorptionselement 54 als optisches Merkmal 51 ausgewertet wird. Das bewegte Teil 31 ist im gezeigten Beispiel ein Getrieberad des mechanischen Zählwerks 3.

Der magneto-elektronischen Abtast- 42 und der Manipulations-Sensor 43 sind als Hall-Sensoren ausgebildet.

Durch den magneto-elektronischen Abtast-Sensor 42 wird ein an dem bewegten Teil 31 vorgesehener Permanentmagnet 53 als magnetisches Merkmal 52 auswertet.

Zur Detektion von Manipulationen von Außen ist ein magneto-elektronischer Manipulations-Sensor 43 zur Detektion von die Zählereinheit 1 durchdringenden Stör-Magnetfeldern (symbolisiert durch Magnet 55) vorgesehen. Spricht dieser an, also bei Detektion von Stör-Magnetfeldern, wird die Auswertung des magneto-elektronischen Abtast-Sensors 42 deaktiviert und der opto-elektronische Abtast-Sensor 41 aktiviert. Zusätzlich wird in einem Speicher 61 des elektronischen Zählers 4 bzw. eines die Abtast-Sensoren und den Speicher 61 steuernden Mikroprozessors 6 die erkannte Manipulation gespeichert. Durch permanente Aufschaltung der Reflex-Lichtschranke wird ein mehr elektrische Energie verbrauchender Vorgang - wie im Stand der Technik - verwendet, jedoch kann so das elektronisches Zählwerk 4 weiterhin zuverlässig arbeiten.

Für eine Fernabfrage ist eine Hochfrequenz-Sendevorrichtung 7 vorgesehen, vermittels welcher durch den Mikroprozessor 6 der Zählerstand und andere Parameter, beispielsweise Batteriestand oder eine detektierte Manipulation mit Zeitangabe, der Zählereinheit übertragen werden können.

Ebenso kann anstelle oder zusätzlich zur Hochfrequenz-Sendevorrichtung 7 eine insbesondere bidirektionale optische Sende- und/oder Empfangsvorrichtung vorgesehen sein, vermittels welcher ebenso der Zählerstand und/oder andere Parameter der Zählereinheit übertragen werden können.

Ein besonders vorteilhaftes Verfahren zum Betrieb der Zählereinheit sieht vor, zuerst nur den magneto-elektronischen Abtast-Sensors zu aktivieren bis dieser ein sich änderndes Magnetfeld - also den am Getrieberad befindlichen Permanentmagneten beim Durchgang - detektiert.

Zusätzlich wird der magneto-elektronischen Manipulations-Sensor sowie des opto-elektronische Abtast-Sensors bei Detektion eines sich ändernden Magnetfelds durch den magneto-elektronischen Abtast-Sensor aktiviert. Hierdurch ist die Drehrichtung des Getrieberades, also die Flussrichtung des Volumenstromes feststellbar, und eine Überprüfung der Zuverlässigkeit des anliegenden Signals durch den magneto-elektronischer Abtast-Sensor erfolgt durch den magneto-elektronischer Manipulations-Sensor ist ermöglicht.

Hiernach ist eine Strom sparende Deaktivierung des opto-elektronischen Abtast-Sensors möglich.

Die Taktung und Steuerung der Abtast-Sensoren und des Senders wird so eingestellt, dass diese einen minimalen Energieverbrauch verursachen und die Zählereinheit mit handelüblichen Batterien jahrelang auskommt.

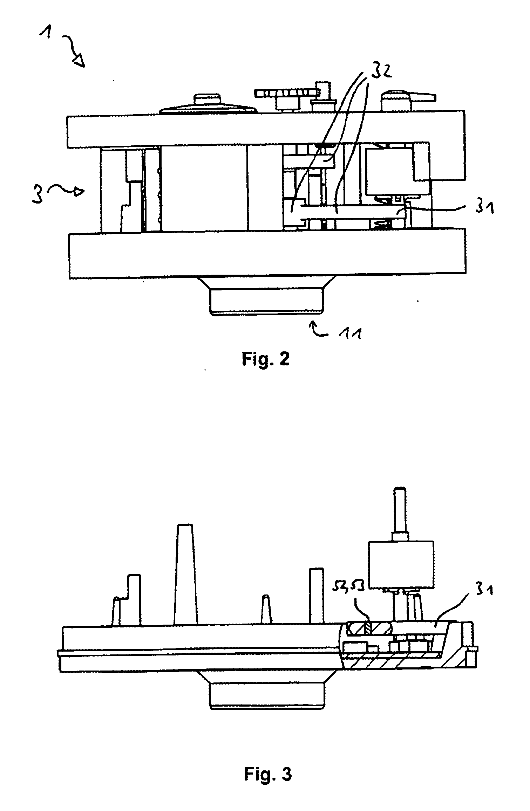

Die Fig. 2 und 3 zeigen in einer Seitenansicht (Fig. 3 teilweise demontiert) eine erfindungsgemäße Zählereinheit 1 mit einem mechanischem Zählwerk 3 mit einem Getriebe 32 mit bewegtem Teil 31.

In dem bewegten Teil 31, einem Zahnrad des Getriebes 32 ist das magnetische Merkmal 52 als ein eingelassener Permanentmagnet 53 ausgebildet.

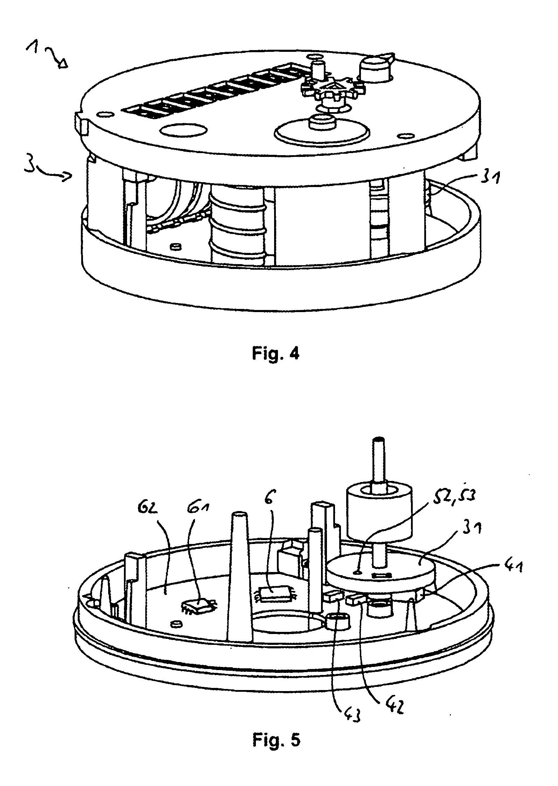

Die Fig. 4 und 5 zeigen die Zählereinheit 1 aus den Fig. 2 und 3 in einer Schrägaufsicht.

Der opto-elektronische Abtast-Sensor 41 ist auf einer Platine 62 unterhalb des bewegten Teils 31, dem Zahnrad des Getriebes 32, angeordnet und wertet das auf dem bewegten Teil angebrachte Reflektions- und Absorptionselement als optisches Merkmal aus.

Der ebenfalls auf der Platine 62 magneto-elektronischer Abtast-Sensor 42 wertet das durch den in dem bewegten Teil 31 eingelassenen Permanentmagneten 53 periodisch auftretende Magnetfeld als magnetisches Merkmal aus.

Auch der magneto-elektronischer Manipulations-Sensor 43 ist auf der Platine 62 platziert und detektiert ein möglicherweise von außen auftretendes Stör-Magnetfeld.

Durch die erfinderische Kombination von getakteten Hallsensoren und einer möglichst kurz zur Anwendung kommenden Reflex-lichtschranke ist eine sehr effektive und Strom sparender Betrieb einer Zählereinheit mit elektronischem Zähler ermöglicht.

### Bezugszeichenliste

- 1: Zählereinheit
- 11: Magnetkupplung

- 3: mechanisches Zählwerk
- 31: bewegtes Teil
- 32: Getriebe

- 4: elektronisches Zählwerk
- 41: opto-elektronischer Abtast-Sensor
- 42: magneto-elektronischer Abtast-Sensor
- 43: magneto-elektronischer Manipulations-Sensor

- 51: optisches Merkmal
- 52: magnetisches Merkmal
- 53: Permanentmagnet
- 54: Reflektions- und Absorptionselement
- 55: Magnet

- 6: Mikroprozessor
- 61: Speicher
- 62: Platine

- 7: Hochfrequenz-Sendevorrichtung

## Patentansprüche

1. Zählereinheit (1) für einen diesen insbesondere austauschbar aufnehmenden Volumenstromzähler,
mit einer Magnetkupplung zur Zusammenwirkung mit einer Hydraulik im Volumenstromzähler,
mit einem bewegte Teile (31) aufweisenden mechanischen Zählwerk (3), das über die Magnetkupplung angetrieben wird,
wobei ein elektronisches Zählwerk (4) vorgesehen ist, das mittels Abtast-Sensoren (41, 42) getriggert ist, **dadurch gekennzeichnet dass**
ein opto-elektronischer Abtast-Sensor (41) und ein magneto-elektronischer Abtast-Sensor (42) vorgesehen sind, die ein magnetisches (52) und ein optisches (51) Merkmal an einem bewegten Teil (31) des mechanischen Zählwerks (3) auswerten.

2. Zählereinheit nach Anspruch 1,
**dadurch gekennzeichnet,**
**dass** ein magneto-elektronischer Manipulations-Sensor (43) zur Detektion von die Zählereinheit (1) durchdringenden Stör-Magnetfeldern vorgesehen ist.

3. Zählereinheit nach Anspruch 1 oder 2,
**dadurch gekennzeichnet,**
**dass** der magneto-elektronische Abtast-Sensor (42) als ein Hall-Sensor ausgebildet ist, der einen in oder an dem bewegten Teil (31) vorgesehenen Permanentmagneten (53) als Merkmal (52) auswertet.

4. Zählereinheit nach Anspruch 2 oder 3,
**dadurch gekennzeichnet,**
**dass** der magneto-elektronische Manipulations-Sensor (43) als ein Hall-Sensor ausgebildet ist.

5. Zählereinheit nach einem der Ansprüche 1 bis 4,
**dadurch gekennzeichnet,**
**dass** der opto-elektronische Abtast-Sensor (41) als Reflex-Lichtschranke ausgebildet ist, wobei an dem bewegten Teil (31) insbesondere ein Reflektions- und ein Absorptionselement (54) als optisches Merkmal (51) ausgewertet wird.

6. Zählereinheit nach einem der Ansprüche 1 bis 5,
**dadurch gekennzeichnet,**
**dass** das bewegte Teil (31) ein Getrieberad des mechanischen Zählwerks (3) ist.

7. Zählereinheit nach einem der Ansprüche 1 bis 6,
**dadurch gekennzeichnet,**
**dass** eine Hochfrequenz-Sendevorrichtung (7) vorgesehen ist, vermittels welcher der Zählerstand und/oder andere Parameter der Zählereinheit übertragen werden können.

8. Zählereinheit nach einem der Ansprüche 1 bis 7,
**dadurch gekennzeichnet,**
**dass** eine insbesondere bidirektionale optische Sende- und/oder Empfangsvorrichtung vorgesehen ist, vermittels welcher der Zählerstand und/oder andere Parameter der Zählereinheit übertragen werden können.

9. Zählereinheit nach einem der Ansprüche 1 bis 8,
**dadurch gekennzeichnet,**
**dass** ein Mikroprozessor (6) vorgesehen ist, der das elektronische Zählwerk (4) und/oder die Sensoren (41 bis 43) auswertet und/oder die Hochfrequenz-Sendevorrichtung (7) und/oder die optische Sende- und/oder Empfangsvorrichtung steuert.

10. Verfahren zur Erfassung eines Volumenstroms vermittels einer Zählereinheit nach einem der Ansprüche 1 bis 9,
**gekennzeichnet durch** die Schritte:
- Aktivierung nur des magneto-elektronischen Abtast-Sensors (42) bis dieser ein sich änderndes Magnetfeld detektiert,
- zusätzliche Aktivierung des magneto-elektronischen Manipulations-Sensors (43) sowie des opto-elektronischen Abtast-Sensors (41) bei Detektion eines sich ändernden Magnetfelds **durch** den magneto-elektronischen Abtast-Sensor (42),
- Auswertung des Manipulations-Sensors (43),
- Erfassung der Drehrichtung des bewegten Teils (31) vermittels des opto-elektronischen Abtast-Sensors (41) und des magneto-elektronischen Abtast-Sensors (42) zur Feststellung der Richtung des Volumenstroms **durch** den Volumenstromzähler,
- Deaktivierung des opto-elektronischen Abtast-Sensors (41).

11. Verfahren nach Anspruch 10,
**dadurch gekennzeichnet,**
**dass** bei Detektion von Stör-Magnetfeldern die Auswertung des magneto-elektronischer Abtast-Sensors (42) deaktiviert und der opto-elektronische Abtast-Sensor (41) aktiviert wird und/oder in einem Speicher (61) des elektronischen Zählers oder des Mikroprozessors (6) die erkannte Manipulation gespeichert wird.

## Claims

1. Counter unit (1) for a volumetric flow meter that accommodates the latter in particular in exchangeable fashion,
comprising a magnetic coupling for interaction with a hydraulic system in the volumetric flow meter,
comprising a mechanical counting mechanism (3), which has moving parts (31) and which is driven via the magnetic coupling,
an electronic counting unit (4) being provided, which is triggered by means of scanning sensors (41, 42),
**characterized**
**in that** an optoelectronic scanning sensor (41) and a magneto-electronic scanning sensor (42) are provided, which evaluate a magnetic (52) and an optical (51) feature on a moving part (31) of the mechanical counting mechanism (3).

2. Counter unit according to Claim 1,
**characterized**
**in that** provision is made of a magneto-electronic manipulation sensor (43) for detecting interfering magnetic fields permeating the counter unit (1).

3. Counter unit according to Claim 1 or 2,
**characterized**
**in that** the magneto-electronic scanning sensor (42) is formed as a Hall sensor which evaluates a permanent magnet (53) provided in or on the moving part (31) as feature (52).

4. Counter unit according to Claim 2 or 3,
**characterized**
**in that** the magneto-electronic manipulation sensor (43) is formed as a Hall sensor.

5. Counter unit according to any of Claims 1 to 4,
**characterized**
**in that** the optoelectronic scanning sensor (41) is formed as a reflection light barrier, in particular a reflection and an absorption element (54) being evaluated as optical feature (51) on the moving part (31).

6. Counter unit according to any one of Claims 1 to 5,
**characterized**
**in that** the moving part (31) is a gearwheel of the mechanical counting mechanism (3).

7. Counter unit according to any of Claims 1 to 6,
**characterized**
**in that** a high-frequency transmitting device (7) is provided, by means of which the counter reading and/or other parameters of the counter unit can be transmitted.

8. Counter unit according to any of Claims 1 to 7,
**characterized**
**in that** an in particular bidirectional optical transmitting and/or receiving device is provided, by means of which the counter reading and/or other parameters of the counter unit can be transmitted.

9. Counter unit according to any of Claims 1 to 8,
**characterized**
**in that** a microprocessor (6) is provided, which evaluates the electronic counting mechanism (4) and/or the sensors (41 to 43) and/or controls the high-frequency transmitting device (7) and/or the optical transmitting and/or receiving device.

10. Method for detecting a volumetric flow by means of a counter unit according to any of Claims 1 to 9,
**characterized by** the following steps:
- activation of only the magneto-electronic scanning sensor (42) until the latter detects a changing magnetic field,
- additional activation of the magneto-electronic manipulation sensor (43) and of the optoelectronic scanning sensor (41) upon detection of a changing magnetic field by the magneto-electronic scanning sensor (42),
- evaluation of the manipulation sensor (43),
- detection of the direction of rotation of the moving part (31) by means of the optoelectronic scanning sensor (41) and the magneto-electronic scanning sensor (42) in order to ascertain the direction of the volumetric flow through the volumetric flow meter,
- deactivation of the optoelectronic scanning sensor (41).

11. Method according to Claim 10,
**characterized**
**in that**, upon detection of interfering magnetic fields, the evaluation of the magneto-electronic scanning sensor (42) is deactivated and the optoelectronic scanning sensor (41) is activated and/or the manipulation identified is stored in a memory (61) of the electronic counter or of the microprocessor (6).

## Revendications

1. Unité de comptage (1) pour un compteur de débit volumique recevant celle-ci notamment de manière amovible, comprenant un accouplement magnétique destiné à interagir avec un dispositif hydraulique dans le compteur de débit volumique, comprenant un compteur mécanique (3) présentant des pièces mobiles (31) qui est entraîné par le biais de l'accouplement magnétique, un compteur électronique (4) étant prévu, lequel est déclenché au moyen de détecteurs à balayage (41, 42), **caractérisée en ce qu'**il est prévu un détecteur à balayage optoélectronique (41) et un détecteur à balayage magnéto-électronique (42) qui interprètent une caractéristique magnétique (52) et une caractéristique optique (51) sur une pièce mobile (31) du compteur mécanique (3).

2. Unité de comptage selon la revendication 1, **caractérisée en ce qu'**il est prévu un détecteur de manipulation magnéto-électronique (43) pour détecter les champs magnétiques parasites qui traversent l'unité de comptage (1).

3. Unité de comptage selon la revendication 1 ou 2, **caractérisée en ce que** le détecteur à balayage magnéto-électronique (42) est réalisé sous la forme d'un capteur à effet Hall qui interprète en tant que caractéristique (52) un aimant permanent (53) prévu dans ou sur la pièce mobile (31).

4. Unité de comptage selon la revendication 2 ou 3, **caractérisée en ce que** le détecteur de manipulation magnéto-électronique (43) est réalisé sous la forme d'un capteur à effet Hall.

5. Unité de comptage selon l'une des revendications 1 à 4, **caractérisée en ce que** le détecteur à balayage optoélectronique (41) est réalisé sous la forme d'une barrière photoélectrique à réflexion, un élément de réflexion et d'absorption (54) étant notamment interprété comme caractéristique optique (51) sur la pièce mobile (31).

6. Unité de comptage selon l'une des revendications 1 à 5, **caractérisée en ce que** la pièce mobile (31) est une roue d'engrenage du compteur mécanique (3).

7. Unité de comptage selon l'une des revendications 1 à 6, **caractérisée en ce qu'**il est prévu un dispositif émetteur à haute fréquence (7) au moyen duquel peuvent être transmis la valeur comptée et/ou d'autres paramètres de l'unité de comptage.

8. Unité de comptage selon l'une des revendications 1 à 7, **caractérisée en ce qu'**il est prévu un dispositif émetteur et/ou récepteur optique notamment bidirectionnel au moyen duquel peuvent être transmis la valeur comptée et/ou d'autres paramètres de l'unité de comptage.

9. Unité de comptage selon l'une des revendications 1 à 8, **caractérisée en ce qu'**il est prévu un microprocesseur (6) qui interprète le compteur électronique (4) et/ou les détecteurs (41 à 43) et/ou commande le dispositif émetteur à haute fréquence (7) et/ou le dispositif émetteur et/ou récepteur optique.

10. Procédé pour acquérir un débit volumique au moyen d'une unité de comptage selon l'une des revendications 1 à 9, **caractérisé par** les étapes :
- Activation du détecteur à balayage magnéto-électronique (42) seulement jusqu'à ce que celui-ci détecte un champ magnétique qui varie,
- Activation en plus du détecteur de manipulation magnéto-électronique (43) ainsi que du détecteur à balayage optoélectronique (41) en cas de détection d'un champ magnétique qui varie par le détecteur à balayage magnéto-électronique (42),
- Interprétation du détecteur de manipulation (43),
- Détection du sens de rotation de la pièce mobile (31) au moyen du détecteur à balayage optoélectronique (41) et du détecteur à balayage magnéto-électronique (42) en vue de déterminer le sens du débit volumique à travers le compteur de débit volumique,
- Désactivation du détecteur à balayage optoélectronique (41).

11. Procédé selon la revendication 10, **caractérisé en ce qu'**en cas de détection de champs magnétiques parasites, l'interprétation du détecteur à balayage magnéto-électronique (42) est désactivée et le détecteur à balayage optoélectronique (41) est activé et/ou la manipulation détectée est enregistrée dans une mémoire (61) du compteur électronique ou du microprocesseur (6).
